# EUROPEAN PATENT APPLICATION

(11) **EP 4 425 637 A1**
(43) Date of publication of application: **04.09.2024**
(21) Application number: 23219981.0
(22) Date of filing: 22.12.2023
(51) Int. Cl.: H01M 10/0585, H01M 50/417, H01M 50/46, H01M 10/04, H01M 50/403

(54) **METHOD FOR MANUFACTURING A BATTERY**

(30) Priority: 01.03.2023 JP 2023031085
(71) Applicant: Prime Planet Energy & Solutions, Inc., Chuo-ku Tokyo 103-0022 (JP)
(72) Inventor: ISEDA, Taisuke, Tokyo, 103-0022 (JP); NISHIDA, Akira, Tokyo, 103-0022 (JP)
(74) Representative: Kuhnen & Wacker Patent- und Rechtsanwaltsbüro PartG mbB

(57) **Abstract**

A method for manufacturing a storage device (100) disclosed herein includes an arranging step (S1) of arranging an adhesion layer slurry on a surface of a separator (26), a forming step (S2) of removing a solvent and a dispersion medium from the adhesion layer slurry to form an adhesion layer (6), and a stacking step (S3) of stacking a positive electrode (22), the separator (26), and a negative electrode (24). In the stacking step (S3), the separator (26) including the adhesion layer (6) arranged in a shape of a plurality of dots on a surface thereof is used, and each of the dots of the adhesion layer (6) includes an adhesion layer non-formed region (E) in a central portion thereof when viewed from top.

## Description

### BACKGROUND OF THE DISCLOSURE

### 1. Field

The present disclosure relates to a method for manufacturing a storage device.

### 2. Background

For example, Japanese Patent No. 5328034 discloses a battery including a wound electrode body that includes a pair of electrodes and a separator and further includes a heat resistant porous layer including adhesive resin on a surface of the separator. The wound electrode body can be fabricated, for example, by stacking the pair of electrodes with the separator interposed therebetween and winding an obtained stacked body.

### SUMMARY

According to a study of the present inventors, it was found that, for example, in a case where an adhesion layer slurry including an adhesive is applied to a surface of a separator to form an adhesion layer, when the separator and the electrodes are stacked in a state where a solvent in the adhesion layer slurry remains on the surface of the separator, there is a probability that the solvent is transferred to the electrodes. Thus, there is a probability that capacity and input and output of a storage device are reduced.

In view of the foregoing, the present disclosure has been devised and it is therefore a main object of the present disclosure to provide a technology that can preferably reduce a solvent and a dispersion medium remaining in an electrode body.

The present disclosure provides a method for manufacturing a storage device, the storage device including an electrode body that includes a first electrode, a second electrode, and a separator arranged between the first electrode and the second electrode, that includes an arranging step of arranging an adhesion layer slurry including an adhesive and at least one of a solvent that can dissolve the adhesive and a dispersion medium that can disperse the adhesive at least on one surface of the separator, a forming step of removing at least one of the solvent and the dispersion medium from the adhesion layer slurry on the separator to form an adhesion layer, and stacking step of stacking the first electrode, the separator, and the second electrode in this order, and in which, in the stacking step, as the separator, a separator including an adhesion layer arranged in a shape of a plurality of dots on at least one surface of the separator is used, and each of the dots of the adhesion layer includes an adhesion layer non-formed region (a hollow region) in a central portion thereof when viewed from top. Although details will be described later, according to the method for manufacturing a storage device having the above-described configuration, a storage device in which a solvent and a dispersion medium remaining in an electrode body are preferably reduced can be achieved.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a flowchart illustrating a method for manufacturing a battery according to one preferred embodiment.
FIG. 2 is a diagram illustrating an electrode body manufacturing device according to one preferred embodiment.
FIG. 3 is a schematic plan view of a separator after forming an adhesion layer according to one preferred embodiment.
FIG. 4 is a schematic longitudinal sectional view taken along line IV-IV of FIG. 3.
FIG. 5 is a schematic diagram illustrating a wound body before a pressing step according to one preferred embodiment.
FIG. 6 is a schematic diagram illustrating the wound body after the pressing step according to one preferred embodiment.
FIG. 7 is a perspective view schematically illustrating a battery according to one preferred embodiment.
FIG. 8 is a schematic longitudinal sectional view taken along line VIII-VIII of FIG. 7.
FIG. 9 is a schematic longitudinal sectional view taken along line IX-IX of FIG. 7.
FIG. 10 is a schematic cross-sectional view taken along line X-X of FIG. 7.
FIG. 11 is a perspective view schematically illustrating a wound electrode body mounted on a sealing plate.
FIG. 12 is a perspective view schematically illustrating the wound electrode body on which a positive electrode second current collector and a negative electrode second current collector are mounted.
FIG. 13 is a schematic view illustrating a configuration of the wound electrode body of the battery according to one preferred embodiment.
FIG. 14 is an enlarged view schematically illustrating an interface between a positive electrode, a negative electrode, and a separator according to one preferred embodiment.

### DETAILED DESCRIPTION OF THE PREFERRED EMBODIMENTS

Preferred embodiments of a technology disclosed herein will be described below with reference to the accompanying drawings. As a matter of course, the following description is not intended to be limiting the technology disclosed herein to the following preferred embodiments. In the drawings described below, the members and parts with the same operation are denoted by the same reference signs. A dimensional relation (of a length, a width, a thickness, or the like) in each of the drawings does not reflect an actual dimensional relation. Note that matters other than matters specifically mentioned in this specification and necessary for carrying out the technology disclosed herein (for example, general configuration and manufacturing process of a battery that do not characterize the present disclosure) can be understood as design matters for those skilled in the art based on the related art in the related field. The technology disclosed herein can be carried out based on contents disclosed in this specification and the common general technical knowledge in the field. Note that, in this specification, the notation "A to B" that indicates a range means "A or more and B or less." The notation "A to B" also encompasses "a range that exceeds A" and "a range that is less than B."

Note that, as used in this specification, the term "storage device" refers to a power device that can perform charging and discharging. The storage device (power storage device) encompasses a battery, such as a primary battery, a secondary battery (for example, a nonaqueous electrolyte secondary battery, such as a lithium-ion secondary battery or the like, a nickel-hydrogen battery), or the like, and a capacitor (physical battery), such as an electric double layer capacitor or the like. An electrolyte may be any one of a liquid electrolyte (an electrolytic solution), a gel electrolyte, and a solid electrolyte.

### <Method for Manufacturing Battery>

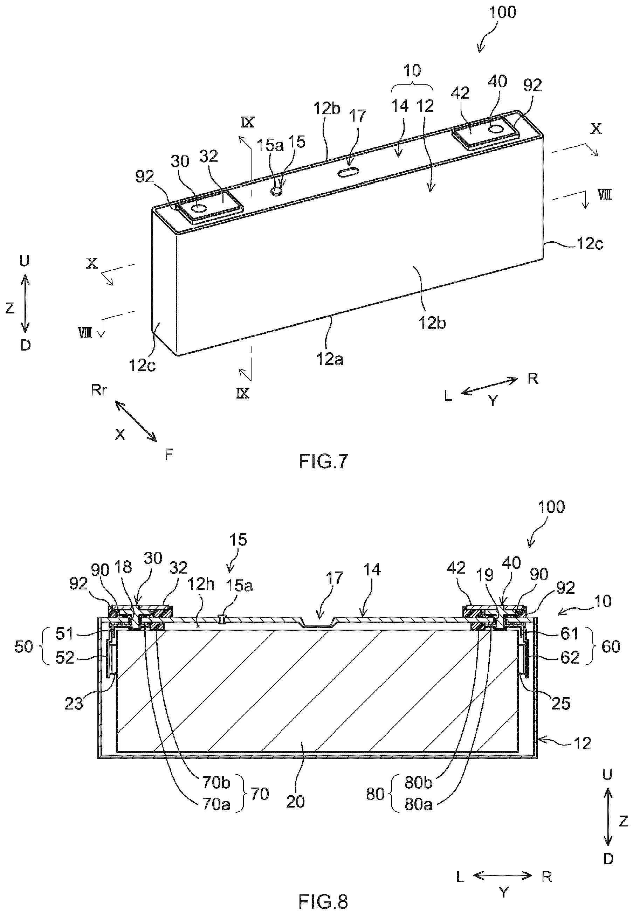

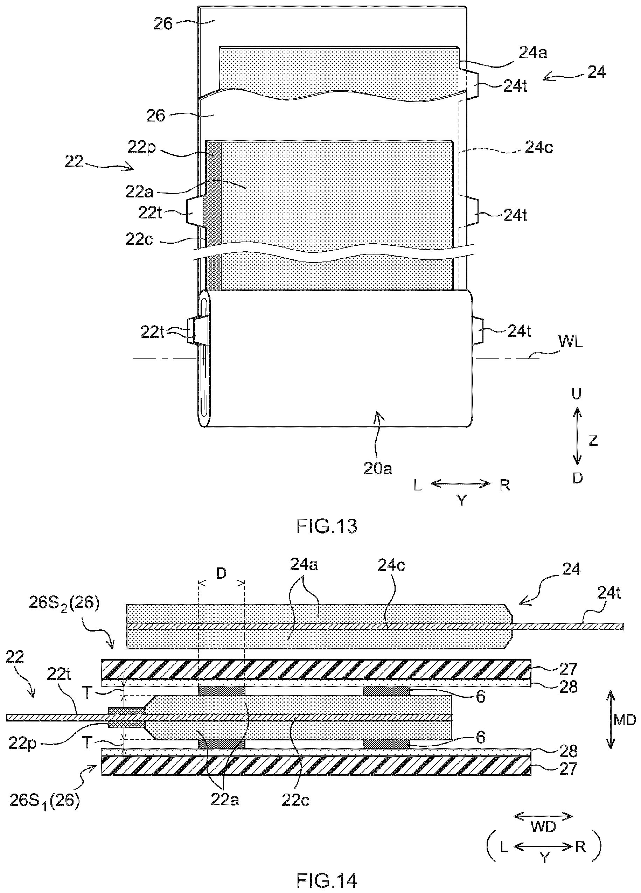

The present technology will be described below using, as an example, a method for manufacturing a lithium-ion secondary battery (which will be hereinafter also referred to simply as a "battery 100," see FIG. 7) that is one embodiment of a storage device disclosed herein. Note that, in the following description, as illustrated in FIG. 8 that will be referred to later, a case where a first electrode is a positive electrode 22 and a second electrode is a negative electrode 24 will be described, but the technology disclosed herein can be applied, for example, in a case where the first electrode is the negative electrode 24 and the second electrode is the positive electrode 22. Also, in the following description, as illustrated in FIG. 13 that will be referred to later, a case where a wound electrode body, as an electrode body, that is configured such that a strip-shaped positive electrode 22 and a strip-shaped negative electrode 24 are wound with a strip-shaped separator 26 interposed therebetween is manufactured will be described but the technology disclosed herein can be applied in a case where a stacked electrode body, as an electrode body, that is configured such that a positive electrode 22 and a negative electrode 24 are stacked with a separator 26 interposed therebetween is manufactured. A method for manufacturing a battery disclosed herein may further include some other process step in an arbitrary stage, and one or more of process steps can be omitted as appropriate unless the one or more of the process steps are described as essential elements. An order of the process steps can be changed as long as an effect of the technology disclosed herein is exhibited.

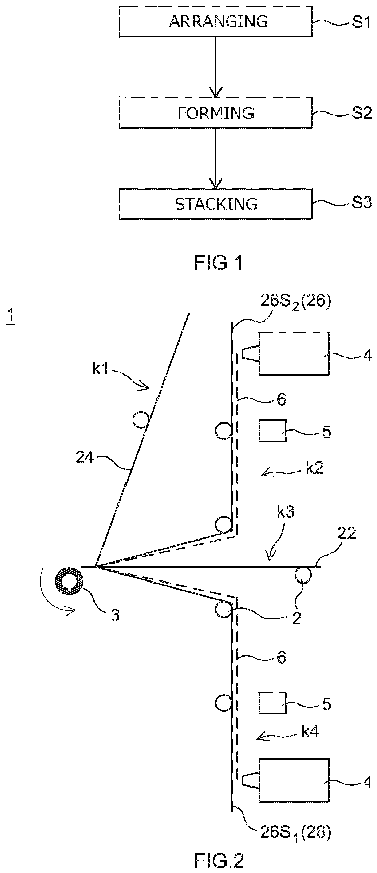

FIG. 1 is a flowchart illustrating a method for manufacturing the battery 100 according to this preferred embodiment. First, the method for manufacturing the battery 100 according to this preferred embodiment is a method for manufacturing a battery including an electrode body (in this case, wound electrode bodies 20a, 20b, and 20c) including a first electrode (in this case, a positive electrode 22), a second electrode (in this case, a negative electrode 24), and a separator 26 (in this case, a first separator 26S₁ and a second separator 26S₂) arranged between the first electrode and the second electrode. As illustrated in FIG. 1, the method for manufacturing the battery 100 according to this preferred embodiment includes an arranging step (Step S1) of arranging an adhesive and an adhesion layer slurry including at least one of a solvent that can dissolve the additive and a dispersion medium that can disperse the adhesive on at least one surface of the separator 26, a forming step (Step S2) of removing at least one of the solvent and the dispersion medium from the adhesion layer slurry on the separator 26 to form an adhesion layer 6, and a stacking step (Step S3) of stacking the first electrode (in this case, the positive electrode 22), the separator 26, and the second electrode (in this case, the negative electrode 24). In the stacking step, the separator 26 having the adhesion layer 6 arranged in a plurality of dots on at least one surface of the separator is used. A feature of the present disclosure is that each of dots of the adhesion layer 6 has an adhesion layer non-formed region (a hollow region) E in a central portion when viewed from top. The adhesion layer non-formed region E is a region in which the adhesion layer 6 is not arranged (formed).

The method for manufacturing the battery 100 described above includes a forming step of removing at least one of the solvent and the dispersion medium from the adhesion layer slurry on the separator 26 arranged in the arranging step to form the adhesion layer 6 in a shape of dots. Furthermore, each of dots of the adhesion layer 6 has the adhesion layer non-formed region E in the central portion when viewed from top. With the separator 26 in a shape of dots and the adhesion layer non-formed region E, the solvent and dispersion medium remaining on the adhesion layer 6 can be easily volatilized during fabrication of the electrode body, and therefore, an amount of the remaining solvent and dispersion medium can be preferably reduced. Accordingly, the battery 100 in which reduction in performance is preferably suppressed can be achieved. Specifically, a case where water as a solvent or a dispersion medium is included is preferable as an object to which the technology disclosed herein is applied since water is not easily volatilized. A method for manufacturing the battery 100 according to this preferred embodiment will be described below using an electrode body manufacturing device 1 that embodies the method for manufacturing the battery 100. In the following description, a case where the adhesion layer 6 in a shape of dots is arranged on one surface (a first surface) of each of the first separator 26S₁ and the second separator 26S₂.

FIG. 2 is a schematic view illustrating a configuration of the electrode body manufacturing device 1 according to this preferred embodiment. As illustrated in FIG. 2, the electrode body manufacturing device 1 according to this preferred embodiment includes a plurality of (in this case, six) rollers 2, a winding core 3, an adhesive application section 4, and a drying section 5. In this preferred embodiment, the electrode body manufacturing device 1 also includes a cutter, a pressing jig, and a controller, which are not illustrated. Herein, the cutter is for cutting the first separator 26S₁ and the second separator 26S₂. The pressing jig is for pressing the first separator 26S₁ and the second separator 26S₂ to the winding core 3. Each component of the electrode body manufacturing device 1 preferably includes a necessary actuator as appropriate. The controller is configured to control each component of the electrode body manufacturing device 1 such that a necessary operation is executed at a predetermined timing in accordance with a preset program. The controller can be embodied by a computer, such as, for example, a microcontroller.

Each of the positive electrode 22, the negative electrode 24, the first separator 26S₁, and the second separator 26S₂ is prepared in a state of being wound around a reel (not illustrated) or the like. The positive electrode 22, the negative electrode 24, the first separator 26S₁, and the second separator 26S₂ are conveyed along preset conveyance paths k1 to k4, respectively. The conveyance path k1 is a path on which the negative electrode 24 is sent out from the unillustrated corresponding reel toward the winding core 3. The conveyance path k2 is a path on which the second separator 26S₂ is sent out from the unillustrated corresponding reel toward the winding core 3. The conveyance path k3 is a path on which the positive electrode 22 is sent out from the unillustrated corresponding reel toward the winding core 3. The conveyance path k4 is a path on which the first separator 26S₁ is sent out from the unillustrated corresponding reel toward the winding core 3. A dancer roll mechanism that removes looseness of a corresponding one of the positive electrode 22, the negative electrode 24, the first separator 26S₁, and the second separator 26S₂ that are sent out, a tensioner that adjusts a tension, or the like may be arranged on each of the conveyance paths k1 to k4, as appropriate.

Each of the plurality of rollers 2 is arranged on a corresponding one of the conveyance paths k1 to k4 of the positive electrode 22, the negative electrode 24, the first separator 26S₁, and the second separator 26S₂. The plurality of rollers 2 are examples of a conveyance device. The plurality of rollers 22 are arranged at predetermined positions to define the conveyance paths k1 to k4. Each of the positive electrode 22, the negative electrode 24, the first separator 26S₁, and the second separator 26S₂ is conveyed by a corresponding one or ones of the plurality of rollers 2. Note that, in this preferred embodiment, a number of the rollers 2 is six but, in other embodiments, the number of the rollers 2 may be some other number than six.

The winding core 3 has a function of holding the positive electrode 22, the negative electrode 24, the first separator 26S₁, and the second separator 26S₂ that are wound on a side peripheral surface. The winding core 3 is an approximately cylindrical member herein. However, when the positive electrode 22, the negative electrode 24, the first separator 26S₁, and the second separator 26S₂ are wound into a flat shape, a flat winding core may be used. As the winding core 3, an undivided winding core is used herein, but a winding core divided in a radial direction or a winding core having a variable diameter may be used.

The winding core 3 may further include a suction hole, a groove, or the like. The suction hole is, for example, a hole used for sucking the first separator 26S₁ and the second separator 26S₂ that are wound on the side peripheral surface. A shape of the suction hole when viewed from top may be a circular shape and may be a rectangular shape. Alternatively, the suction hole may have a slit-like shape. The suction hole is typically formed inside the winding core 3 and includes a suction flow path that communicates with the suction hole. The suction path forms a negative pressure in the suction hole. The suction hole may be connected to, for example, a vacuum line externally installed as appropriate and configured such that a negative pressure is generated. The groove can function as a receiving section on which a blade of the cutter is brought down in cutting the first separator 26S₁ and the second separator 26S₂. Thus, the winding core 3 and the blade of the cutter contact each other, so that damage of the winding core 3 and the blade can be suppressed.

The adhesive application section 4 applies the adhesion layer slurry to at least one surface of the separator 26 (in this case, the first separator 26S₁ and the second separator 26S₂) in a conveying direction. The adhesive application section 4 is configured to apply only a desired amount of the adhesion layer slurry to a desired region of each of the first separator 26S₁ and the second separator 26S₂. The adhesion layer slurry includes, for example, an adhesion layer binder (an adhesive) that will be described below and at least one of a solvent and a dispersion medium. Note that the term "slurry" can encompass an ink, a paste, or the like.

The solvent of the adhesion layer slurry may be a solution that can dissolve the adhesion layer binder (the additive). The dispersion medium of the adhesion layer slurry may be a solution that can disperse the adhesion layer binder (the additive). Examples of the solvent and the dispersion medium include water, an aqueous solvent, an organic solvent, a mixed solvent thereof, or the like. For example, from a viewpoint of reducing an environmental load, a so-called aqueous solvent is preferably used. In this case, water or a water-based mixed solvent can be used. As solvent components other than water that constitute the mixed solvent, one or two or more organic solvents (a lower alcohol, a lower ketone, or the like) that can be uniformly mixed with water can be selected as appropriate to be used. For example, use of an aqueous solvent 80 mass% or more (more preferably 90 mass% or more, and further more preferably 95 mass% or more) of which is water is preferable. A particularly preferable example is an aqueous solvent substantially composed of water. The solvent of the adhesion layer slurry is not limited to a so-called aqueous solvent, but may also be a so-called organic solvent. Examples of the organic solvent include, for example, an alcohol-based solvent, a ketone-based solvent, an ester-based solvent, a halogen-based solvent, a hydrocarbon-based solvent, a nitrogen-containing solvent, or the like. As for the above-described organic solvents, one of them may be independently used, and two or more of them may be used in combination. From a viewpoint of facilitating removal of the solvent in drying after applying the adhesion layer slurry, a boiling point of each of the solvent and the dispersion medium is preferably, for example, about 50 °C to 200 °C and about 100 °C to 150 °C. When the boiling point is reduced to an excessive low level, the adhesion layer slurry is dried up before being applied or the like, so that stability of application of the adhesion layer slurry is impaired in some cases. Therefore, it is preferable to select a proper boiling point as appropriate in accordance with an application method. Note that a ratio of the solvent/the dispersion medium in the adhesion layer slurry is adjusted as appropriate in accordance with the application method but, for example, when gravure printing, inkjet printing, or like application method is used, the ratio is preferably about 50% to 99% and more preferably about 80% to 95% in terms of a weight ratio. The adhesion layer binder (the additive) may be dissolved and be dispersed in the adhesion layer slurry. When the adhesion layer slurry is a solution in which the additive is dissolved, the additive excessively soaks into a heat resistance layer 28 in some cases. Therefore, the adhesion layer slurry is preferably a dispersion solution of the additive. Although not particularly limited, a content of each of the solvent and the dispersion medium in the adhesion layer slurry can be, for example, about 50 mass% to 99 mass% (preferably, about 80 mass% to 95 mass%) when it is assumed that a total of the adhesion layer slurry is 100 mass%.

Examples of the adhesion layer binder (the additive) include acrylic resin, fluororesin, rubber resin, urethane resin, silicone resin, epoxy resin, or the like. As for the above-described resins, one of them may be independently used, and two or more of them may be used in combination. Examples of rubber resin includes styrene butadiene rubber (SBR). Fluororesin and acrylic resin are preferable since each of fluororesin and acrylic resin has a high flexibility and can more preferably exhibit adhesiveness to an electrode (in this case, the positive electrode 22). Examples of fluororesin include polyvinylidene fluoride (PVdF), polytetrafluoroethylene (PTFE), or the like. A type of the adhesion layer binder may be the same as a heat resistance layer binder that will be described below, and may be different from the heat resistance layer binder. From a viewpoint of ease of handling, it is preferable that the adhesion layer binder develops tackiness (adhesiveness) at normal temperature (for example, about 25 °C). On the other hand, the adhesion layer binder that develops tackiness (adhesiveness) due to heating, applying a pressure, or the like, may be employed. As used herein, the term "tackiness (adhesiveness)" can mean, for example, that a peeling strength obtained by 90-degree peeling test based on JIS Z 0237:2009 is 0.00001 N/20 mm to 0.1 N/20 mm (preferably 0.0001 N/20 mm to 0.01 N/20 mm). Although not particularly limited, the content of the adhesion layer binder in the adhesion layer slurry can be, for example, about 1 mass% to 50 mass% (preferably, about 5 mass% to 20 mass%) when it is assumed that the total of the adhesion layer slurry is 100 mass%.

Note that the adhesion layer slurry can include one or two or more additives, such as known thickener, surfactant, inorganic filler (for example, alumina, titania, and boehmite), or the like, unless an effect of the technology disclosed herein is impaired. In a case where the adhesion layer slurry includes an inorganic filler, the adhesion layer slurry preferably includes the inorganic filler at about 5 mass% to 20 mass% (preferably about 10 mass% to 15 mass%) when it is assumed that a total mass of the adhesion layer slurry is 100 mass%. There is no particular limitation on a viscosity of the adhesion layer slurry as long as the effect of the technology disclosed herein is exhibited, but the viscosity of the adhesion layer slurry can be generally about 10 mPa·s to 100 mPa·s (for example, about 20 mPa·s to 50 mPa·s). The viscosity can be measured, for example, by a commercially available viscometer.

As the adhesive application section 4, various types of application members, such as, for example, inkjet printing, various types of intaglio printing machines, such as a gravure roll coater, a spray coater, or the like, die coaters, such as a slit coater, a comma coater, a capillary coater (a CAP coater), or the like, a lip coater, a calendaring machine, or the like, can be used.

In one preferred aspect, the adhesion layer 6 is adhered to the first electrode (in this case, the positive electrode 22), and the first electrode (in this case, the positive electrode 22) includes lithium-transition metal compound oxide the like. Examples of lithium-transition metal compound oxide includes lithium nickel cobalt manganese composite oxide. In the lithium-transition metal compound oxide, a ratio of an Ni amount (mol) to a transition metal amount (mol) {the Ni amount (mol)/the transition metal amount (mol)} is 0.7 or more (more preferably, 0.8 or more, 0.9 or more). The adhesion layer slurry includes water. For example, the lithium transition metal composite oxide having a composition described above is preferably used from a viewpoint of increasing a capacity of the battery 100, but is known to have particularly low resistance to moisture. Therefore, the composition described above is preferable as an object to which the technology disclosed herein is applied.

The drying section 5 removes at least one of the solvent and the dispersion medium from the adhesion layer slurry on the separator 26. The drying section 5 can cause at least one of the solvent and the dispersion medium to volatilize from the separator 26. There is no particular limitation on the drying method using the drying section 5, and a method, such as, for example, ventilation drying, heat drying, vacuum drying, or the like can be used. For example, when heat drying is used, a heating temperature may be about 40 °C to 300 °C (for example, about 50 °C to 200 °C).

Subsequently, the method for manufacturing the battery 100 according to this preferred embodiment will be described. As described above, the method for manufacturing the battery 100 according to this preferred embodiment includes the arranging step (Step S1), the forming step (Step S2), and the stacking step (Step S3). Each step will be described below.

### (Step S1: Arranging Step)

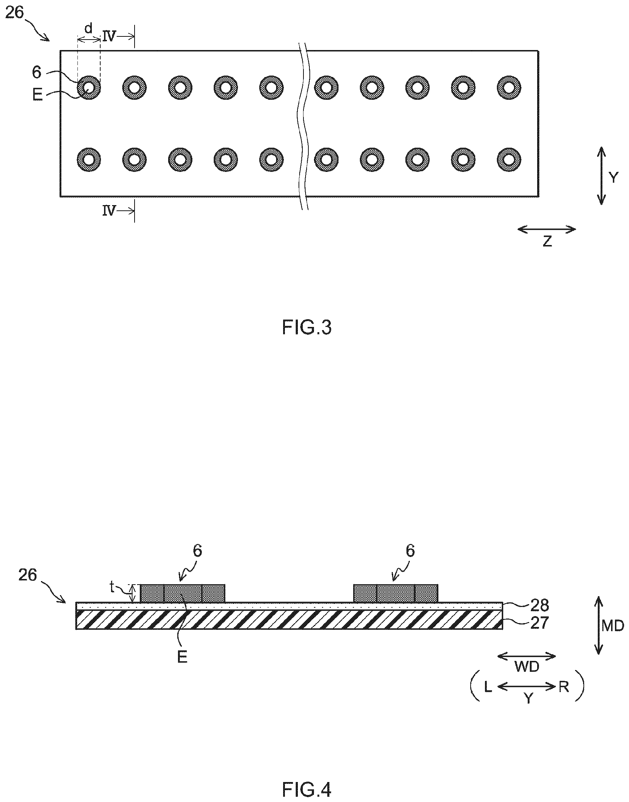

As described above, in this process step, an adhesion layer slurry including an adhesive and at least one of a solvent (solution) and a dispersion medium is arranged (in this case, applied) on at least one surface of the separator 26. As illustrated in FIG. 2, in this preferred embodiment, the adhesion layer slurry is arranged on the first surface of each of the first separator 26S₁ and the second separator 26S₂. Herein, FIG. 3 is a schematic plan view of the separator 26 after formation of the adhesion layer 6 according to this preferred embodiment. As illustrated in FIG. 3, in this preferred embodiment, the adhesion layer 6 in a shape of a plurality of dots each having the adhesion layer non-formed region E in the central portion when viewed from top is finally formed on the surface of the separator 26. For example, using the adhesive application section 4 that has an inkjet printing function and also has a double diameter nozzle, the adhesion layer 6 in a shape of dots can be formed on the surface of the separator 26. Alternatively, the adhesion layer 6 in a shape of dots can be formed on the surface of the separator 26 by giving a plurality of dots with the adhesive application section 4 having an inkjet printing function. However, these are merely examples, and the adhesion layer slurry may be arranged on the surface of the separator 26 by some other method.

### (Step S2: Forming Step)

As described above, in this process step, at least one of the solvent and the dispersion medium is removed from the adhesion layer slurry on the separator 26 to form the adhesion layer 6. That is, the separator 26 as illustrated in FIG. 3 on which the adhesion layer 6 in a shape of the plurality of dots is arranged can be obtained. As illustrated in FIG. 2, in this preferred embodiment, the adhesion layer 6 arranged on the surface of the separator 26 in the arranging step is dried by the drying section 5. The amount of each of the solvent and the dispersion medium remaining in the adhesion layer 6 during fabrication of the electrode body can be preferably reduced by removing the solvent and the dispersion medium. Since the adhesion layer 6 includes the adhesion layer non-formed region E, the solvent and the dispersion medium are preferably volatilized. Note that it can be meant by "removing at least one of the solvent and the dispersion medium from the adhesion layer slurry" that, when it is assumed that a total of the solvent and the dispersion medium in the adhesion layer slurry is 100 mass%, for example, 70 mass% or more or 80 mass% or more, or preferably 90 mass% or more, 95 mass% or more, or 99 mass% or more (particularly preferably, 100 mass%) of the solvent and the dispersion medium is removed. In the technology disclosed herein, it is not necessary to completely remove the solvent and the dispersion medium in this process step, and some of the solvent and the dispersion medium may remain.

Note that, as illustrated in FIG. 3, in this preferred embodiment, the plurality of dots of the adhesion layer 6 are arranged in a line in a short side direction (a direction Y in FIG. 3) and are also arranged in a line in a direction (a direction Z in FIG. 3) orthogonal to the short side direction. An outer shape of each of the dots of the adhesion layer 6 is a circular shape. Specifically, the adhesion layer 6 has a ring shape (a doughnut shape) having the adhesion layer non-formed region E in the central portion. However, the adhesion layer 6 is not limited thereto. In other embodiments, the shape of each of the dots of the adhesion layer 6 when viewed from top can be an elliptic shape, a rectangular shape, a polygonal shape, a C shape, a combination thereof, or the like. An annular portion of the adhesion layer 6 may be notched or slit. Note that, in this preferred embodiment, two dots of the adhesion layer 6 are arranged in the short side direction (the direction Y in FIG. 3) of the strip-shaped separator 26, but arrangement of the dots is not limited thereto. In other embodiments, one dot of the adhesion layers 6 may be arranged in a line in the short side direction (the direction Y in FIG. 3) of the separator 26, and three or more dots of the adhesion layers 6 may be arranged in a line in the short side direction (the direction Y in FIG. 3) of the separator 26. In this preferred embodiment, the shape of the adhesion layer non-formed region E is a circular shape in a plan view of the separator 26, but the shape is not limited thereto. In other embodiments, the shape of the adhesion layer non-formed region E may be an elliptic shape, a rectangular shape, or various other shapes.

The adhesion layer 6 preferably includes mainly the adhesion layer binder as described above. Herein, it can be meant by "mainly including the adhesion layer binder" that, when it is assumed that the entire adhesion layer 6 is 100 volume%, the adhesion layer 6 includes the adhesion layer binder at, for example, 50 volume% or more or 60 volume% or more, preferably 70 volume% or more or 80 volume% or more, or more preferably 90 volume% or more or 95 volume% or more (may be 100 volume% or more). Thus, a predetermined adhesiveness can be properly exhibited to the electrode (in this case, the positive electrode 22).

As described above, the adhesion layer 6 may include some other material (for example, an inorganic filler, such as alumina, titania, boehmite, or the like), in addition to the adhesion layer binder. In a case where the adhesion layer 6 includes the inorganic filler, it is preferable that the adhesion layer 6 includes the inorganic filler at, for example, about 10 mass% to 90 mass% (preferably, about 20 mass% to 80 mass%) when it is assumed that the entire adhesion layer 6 is 100 mass%.

In this case, when it is assumed that, when viewed from top, an area of the first surface of the separator 26 is S1 and a total area of a portion where the adhesion layer 6 is arranged on the first surface of the separator 26 is S2, a ratio of S2 to S1 (S2/S1) is not particularly limited as long as the effect of the technology disclosed herein is exhibited. An upper limit of the ratio (S2/S1) is, for example, 0.5 or less or 0.3 or less, and from a viewpoint of more preferably reducing the amount of the solvent and the dispersion medium remaining in the adhesion layer 6 during fabrication of the electrode body, the upper limit of the ratio is preferably 0.1 or less, and may be 0.07 or less, or 0.05 or less. A lower limit of the ratio (S2/S1) is, for example, 0.01 or more and, from a viewpoint of preferably ensuring an adhesive strength between the separator 26 and the electrode, the lower limit is preferably 0.02 or more, and more preferably 0.03 or more. That is, when it is assumed that the area of the first surface of the separator 26 is S1 and the total area of the portion where the adhesion layer 6 is arranged on the first surface of the separator 26 is S2, from a viewpoint of reducing the amount of the solvent or the dispersion medium remaining in the adhesion layer 6 during fabrication of the electrode body, S2/S1 ≤ 0.1 is preferable. Note that "the total area of the portion where the adhesion layer 6 is arranged on the first surface of the separator 26 is S2" refers to a total area of the adhesion layer 6 arranged in a shape of dots (outer peripheral regions) and the adhesion layer non-formed regions E in the plan view of the first surface of the separator 26.

The adhesion layer 6 in a shape of dots and the ratio of the area of the adhesion layer non-formed regions E to the area of the adhesion layer 6 in a shape of dots when viewed from top are not particularly limited as long as the effect of the technology disclosed herein is exhibited. The lower limit of the ratio is, for example, 0.05% or more and, from a viewpoint of more preferably reducing the amount of the solvent or the dispersion medium remaining in the adhesion layer 6 during fabrication of the electrode body and from a viewpoint of preferably suppressing reduction of an input and output characteristic of the battery 100 due to arrangement of the adhesion layer 6, the lower limit is preferably 1% or more, is more preferably 2% or more, and is particularly preferably 5% or more. The upper limit of the ratio is, for example, 95% or less and, from the viewpoint of preferably ensuring the adhesive strength between the separator 26 and the electrode, the upper limit is preferably 90% or less, is more preferably 80% or less, and particularly preferably 50% or less. That is, the ratio of the area of the adhesion layer non-formed regions E to the area of the adhesion layer 6 in a shape of dots when viewed from top is preferably, for example, 1% or more and 90% or less from a viewpoint of preferably achieving the effect described above. Note that "the area of the adhesion layer 6 in a shape of dots" can refer to an area of a regions each of which is surrounded by an outer peripheral edge of each dot in the plan view of the separator 26, that is, a total area of dots of the adhesion layer 6 and the corresponding adhesion layer non-formed regions E.

A diameter of one dot of the adhesion layer 6 (a diameter corresponding to d in FIG. 3) is not particularly limited as long as the effect of the technology disclosed herein is exhibited. A lower limit of d is, for example, 10 µm or more and, from the viewpoint of preferably ensuring the adhesive strength between the separator 26 and the electrode and from a viewpoint of preferably suppressing variations in adhesive strength, the lower limit is preferably 50 µm or more, is more preferably 75 µm or more, and is particularly preferably 100 µm or more. An upper limit of d is, for example, 600 µm or less and, from a viewpoint of preferably reducing an amount of the solvent remaining in the adhesion layer 6 during fabrication of the electrode body and from a viewpoint of preferably suppressing reduction of the input and output characteristic of the battery 100, Li deposition therein, or the like due to arrangement of the adhesion layer 6, the upper limit of d is preferably 500 µm or less, and is more preferably 300 µm or less or 200 µm or less. That is, in the stacking step, the diameter of one dot of the adhesion layer 6 is preferably, for example, 50 µm or more and 500 µm or less.

FIG. 4 is a schematic longitudinal sectional view taken along line IV-IV of FIG. 3. In the stacking step described below (in other words, in the separator 26 used in the stacking step that will be described below, or after the forming step described above), a thickness of one dot of the adhesion layer 6 (a length thereof in a direction MD in FIG. 4, corresponding to t in FIG. 4) is not particularly limited as long as the effect of the technology disclosed herein is exhibited. A lower limit of t is preferably 0.1 µm or more, is more preferably 0.2 µm or more, and is further more preferably 0.5 µm or more. An upper limit of t is preferably 10 µm or less, is also preferably 5 µm or less, and is more preferably 3 µm or less. That is, t is preferably, for example, in a range of 0.1 µm to 10 µm.

Although not particularly limited, a basis weight of the adhesion layer 6 on the first side of the separator 26 is, for example, 0.005 g/m² or more, is preferably 0.01 g/m² or more, and is more preferably 0.02 g/m² or more. An upper limit of the basis weight of the adhesion layer 6 is, for example, 2.0 g/m² or less, is preferably 1.0 g/m² or less, and is more preferably 0.05 g/m² or less. Note that the term "basis weight" refers to a value obtained by dividing a mass of the adhesion layer by an area of the forming region (the mass of the adhesion layer/the area of the forming region).

### (Step S3: Stacking Step)

As described above, in this process step, the positive electrode 22, the separator 26 (in this case, the first separator 26S₁ and the second separator 26S₂), and the negative electrode 24 are stacked. Note that, in this preferred embodiment, since a wound electrode body is manufactured as an electrode body, the stacking step can include a winding step of winding a strip-shaped first electrode (in this case, the positive electrode 22) and a strip-shaped second electrode (in this case, the negative electrode 24) with a strip-shaped separator 26 (in this case, the first separator 26S₁ and the second separator 26S₂) interposed therebetween to fabricate a wound body 20A. As illustrated in FIG. 2, in this preferred embodiment, the wound body 20A is fabricated by conveying the negative electrode 24, the second separator 26S₂, the positive electrode 22, and the first separator 26S₁ to the winding core 3 via the conveying paths k1 to k4, respectively, and winding the negative electrode 24, the second separator 26S₂, the positive electrode 22, and the first separator 26S₁ around the winding core 3. As the winding core 3, a cylindrical winding core is used in this case, but the winding core 3 is not limited thereto and, for example, a flat winding core may be used. A cross-sectional shape of the wound body 20A may be flat, as in this preferred embodiment, and may be some other shape, such as a perfect circular shape, an elliptic shape, a track shape, or the like. Each sheet is wound such that only a positive electrode tab 22t of the positive electrode 22 protrudes from one side edge in a width direction Y (a left side in FIG. 13) and only a negative electrode tab 24t of the negative electrode 24 protrudes from the other side edge (a right side in FIG. 13). Note that a number of times of winding is preferably adjusted as appropriate in consideration of a performance of the desired battery 100, manufacturing efficiency, or the like that are targets to achieve. In some aspects, the number of times of winding can be 20 or more, and 30 or more. A temperature in the winding step is preferably 50 °C or less, is more preferably 40 °C or less, and is further more preferably 35 °C or less. The winding step is preferably performed at 10 °C or more. Note that, as the adhesion layer 6, for example, an adhesion layer having tackiness (adhesiveness) can be used under the above-described temperature condition in the winding step.

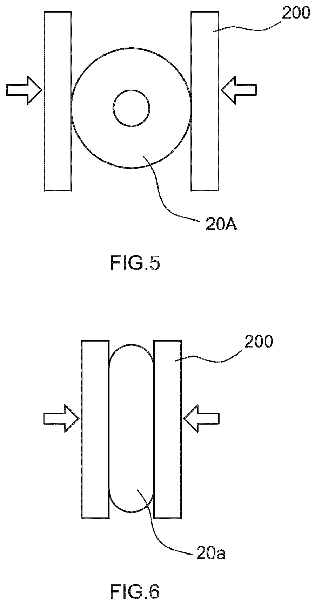

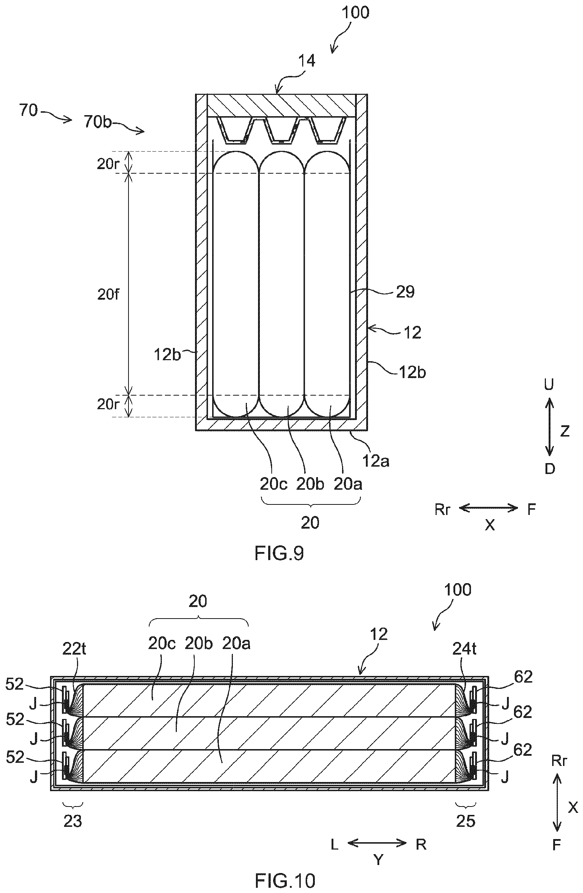

In one preferred aspect, the stacking step includes a pressing step of pressing the first electrode (in this case, the positive electrode 22), the separator 26 (in this case, the first separator 26S₁ and the second separator 26S₂), and the second electrode (in this case, the negative electrode 24) that have been stacked. According to the above-described configuration, the separator 26 and the electrode can be more preferably adhered to each other. Note that, in this preferred embodiment, the wound body 20A obtained in the winding step is pressed and formed into a flat wound electrode body 20a. Herein, FIG. 5 is a schematic diagram illustrating the wound body 20A before the pressing step according to this preferred embodiment. FIG. 6 is a schematic diagram illustrating the wound body 20A after the pressing step according to this preferred embodiment. First, as illustrated in FIG. 5, the wound body 20A is arranged in a press machine 200 having a pair of pressing surfaces opposed to each other, and then, is pressed in directions indicated by white arrows to obtain the flat wound electrode body 20a. In this case, a pressing pressure can be, for example, in a range of 0.1 MPa to 20 MPa (preferably 5 MPa to 10 MPa). Pressing may be pressing without heating, may be heat pressing, and both pressing without heating and heat pressing may be performed. In heat pressing, a heating temperature can be, for example, in the range of 50°C to 100°C (preferably 70°C to 90°C). As illustrated in FIG. 9, the flat electrode body 20a after press forming includes a pair of curved portions 20r each having a curved outer surface and a flat portion 20f having flat outer surfaces connecting the pair of curved portions 20r. In one end portion of the flat wound electrode body 20a after press forming in the width direction Y, a positive electrode tab group 23 including stacked positive electrode tabs 22t is formed, and in the other end portion, a negative electrode tab group 25 including negative electrode tabs 24t stacked is formed. In a central portion of the wound electrode body in the width direction Y, a core portion where a positive electrode active material layer 22a and a negative electrode active material layer 24a are opposed to each other is formed.

In one preferred aspect, the arranging step and the forming step are performed immediately before the stacking step. As illustrated in FIG. 2, in this preferred embodiment, the adhesion layer 6 is arranged and formed immediately before the winding step of winding the positive electrode 22 and the negative electrode 24 with the separator 26 (in this case, the first separator 26S₁ and the second separator 26S₂) interposed therebetween to fabricate the wound body 20A. According to the above-described configuration, a side reaction is less likely to occur in the adhesion layer 6 and dust or the like are less likely to adhere to the adhesion layer 6, and therefore, the configuration is preferable. A time from the forming step to the stacking step is preferably 30 minutes or less, is more preferably 10 minutes or less, and particularly preferably 5 minutes or less. A shortest distance from a position where the forming step is performed (for example, a position of the adhesive application section 4 in FIG. 2) to a position where the stacking step is performed (for example, a position of the winding core 3 in FIG. 2) is preferably 30 m or less, is more preferably 10 m or less, and is particularly preferably 5 m or less. However, the time and the shortest distance are not limited thereto.

Although not illustrated, in this preferred embodiment, the separator 26 is arranged on an outermost peripheral surface of the wound electrode body 20a after the pressing step, and a shape of the wound electrode body 20a is retained by attaching a winding stopper tape to an end portion of a winding end of the separator 26. As the winding stopper tape, a known tape used for a wound electrode body can be used without any particular limitation. Although not illustrated, in this preferred embodiment, the end portion of a winding end of the positive electrode 22 is arranged at the curved portion 20r of the electrode body 20a. In the above-described manner, the electrode bodies 20a, 20b, and 20c of this preferred embodiment can be fabricated.

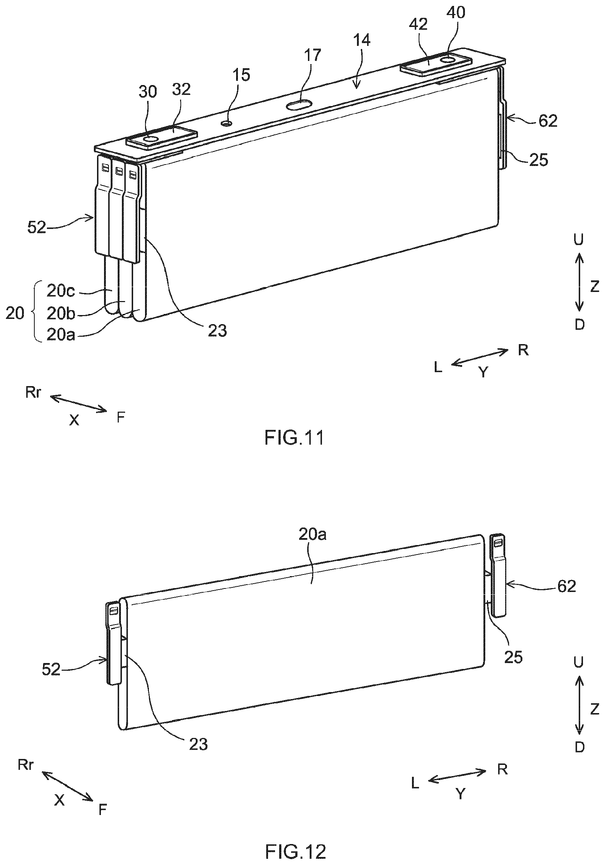

Next, an electrode body group 20 integrated with a sealing plate 14 is fabricated. Specifically, first, as illustrated in FIG. 11, three wound electrode bodies 20a each having a positive electrode second current collector 52 and a negative electrode second current collector 62 attached thereto are prepared and are arranged side by side in the short side direction X as wound electrode bodies 20a, 20b, and 20c. At this time, the wound electrode bodies 20a, 20b, and 20c may all be arranged in parallel such that the positive electrode second current collector 52 of each of the wound electrode bodies 20a, 20b, and 20c is arranged on one side in a long side direction Y (a left side in FIG. 11) and the negative electrode second current collector 62 of each of the wound electrode bodies 20a, 20b, and 20c is arranged on the other side in the long side direction Y (a right side of FIG. 11).

Next, in a state where the plurality of positive electrode tabs 22t are bent as illustrated in FIG. 10, a positive electrode first current collector 51 fixed to the sealing plate 14 and each of the positive electrode second current collectors 52 of the wound electrode bodies 20a, 20b, and 20c are joined to each other. In a state where the plurality of negative electrode tabs 24t are bent, a negative electrode first current collector 61 fixed to the sealing plate 14 and each of the negative electrode second current collectors 62 of the wound electrode bodies 20a, 20b, and 20c are joined to each other. As a joining method, welding, such as, for example, ultrasonic welding, resistance welding, laser welding, or the like, can be used. In particular, it is preferable to use welding by irradiation of a high energy ray, such as laser. A joining portion is formed in each of a recessed portion of the positive electrode second current collector 52 and a recessed portion of the negative electrode second current collector 62 by the above-described welding.

Subsequently, a joined object fabricated in the above-described manner is accommodated in an internal space of an exterior body 12. Specifically, first, an electrode body holder 29 is prepared, for example, by folding an insulating resin sheet formed of a resin material, such as polyethylene (PE) or the like, into a bag shape or a box shape. Next, the electrode body group 20 is accommodated in the electrode body holder 29. Then, the electrode body group 20 covered by the electrode body holder 29 is inserted into the exterior body 12. When the electrode body group 20 has a large weight, that is, when the electrode body group 20 has generally a weight of 1 kg or more, for example, a weight of 1.5 kg or more, and furthermore, a weight of 2 to 3 kg, the exterior body 12 may be arranged (sideways) such that each of long side walls 12b of the exterior body 12 crosses a gravity direction, and the electrode body group 20 may be inserted into the exterior body 12.

Finally, the sealing plate 14 is joined to an edge portion of an opening 12h of the exterior body 12 to seal the opening 12h. Then, the exterior body 12 and the sealing plate 14 are welded and joined together. Welding and joining of the exterior body 12 and the sealing plate 14 can be performed, for example, by laser welding or the like. Thereafter, an electrolytic solution is injected through a liquid injection hole 15, and the liquid injection hole 15 is closed with a sealing member 15a to seal the and the battery 100. In the above-described manner, the battery 100 can be manufactured.

### <Configuration of Battery>

Subsequently, an example of a battery obtained by a method for manufacturing a battery disclosed herein will be described.

FIG. 7 is a perspective view of the battery 100. FIG. 8 is a schematic longitudinal sectional view taken along line VIII-VIII of FIG. 7. FIG. 9 is a schematic longitudinal sectional view taken along line IX-IX of FIG. 7. FIG. 10 is a schematic cross-sectional view taken along line X-X of FIG. 7. In the following description, reference signs L, R, F, Rr, U, and D in the drawings denote left, right, front, rear, up, and down, respectively, and reference signs X, Y, and Z in the drawings denote a short side direction of the battery 100, a long side direction thereof orthogonal to the short side direction, and an up-down direction thereof orthogonal to the short side direction, respectively. However, these directions are defined for convenience of explanation, and do not limit an installation form of the battery 100.

As illustrated in FIG. 8, the battery 100 includes the battery case (case) 10 and the electrode body group 20. The battery 100 according to this preferred embodiment includes, in addition to the battery case 10 and the electrode body group 20, a positive electrode terminal 30, a positive electrode external conductive member 32, a negative electrode terminal 40, a negative electrode external conductive member 42, an external insulating member 92, a positive electrode current collector 50, a negative electrode current collector 60, a positive electrode internal insulating member 70, and a negative electrode internal insulating member 80. Although not illustrated, the battery 100 according to this preferred embodiment further includes an electrolytic solution. The battery 100 is herein a lithium-ion secondary battery.

The battery case 10 is a housing that accommodates the electrode body group 20. The battery case 10 has a flat and bottomed rectangular parallelopiped (rectangle) outer shape. A conventionally used material may be used for the battery case 10, and there is no particular limitation thereon. The battery case 10 is preferably formed of a metal having a predetermined strength. Examples of a metal material forming the battery case 10 include aluminum, aluminum alloy, iron, iron alloy, or the like.

The battery case 10 includes the exterior body 12, the sealing plate 14, and a gas exhaust valve 17. The exterior body 12 is a flat rectangular container having one side formed as the opening 12h. Specifically, as illustrated in FIG. 7, the exterior body 12 includes an approximately rectangular bottom wall 12a, a pair of second side walls 12c extending upward U from short sides of the bottom wall 12a and opposed to each other, and a pair of first side walls 12b extending upward U from long sides of the bottom wall 12a and opposed to each other. An area of the second side wall 12c is smaller than an area of the first side wall 12b. The opening 12h is formed at an upper surface of the exterior body 12 surrounded by the pair of first side walls 12b and the pair of second side walls 12c. The sealing plate 14 is mounted on the exterior body 12 so as to close the opening 12h of the exterior body 12. The sealing plate 14 is an approximately rectangular plate material when viewed from top. The sealing plate 14 is opposed to the bottom wall 12a of the exterior body 12. The battery case 10 is formed by joining (for example, welding joining) the sealing plate 14 to a peripheral edge of the opening 12h of the exterior body 12. Joining of the sealing plate 14 can be performed by welding, such as, for example, laser welding or the like. Specifically, each of the pair of second side walls 12c is joined to a corresponding short side of the sealing plate 14, and each of the pair of first side walls 12b is joined to a corresponding long side of the sealing plate 14.

As illustrated in FIG. 7 and FIG. 8, the gas exhaust valve 17 is formed in the sealing plate 14. The gas exhaust valve 17 is configured to open and discharge gas in the battery case 10 when a pressure in the battery case 10 is a predetermined value or more. The gas exhaust valve 17 in this preferred embodiment is a recessed portion that has an approximately circular shape when viewed from top and is recessed from an outer surface of the sealing plate 14 toward the electrode body group 20. A thin portion having a smeller thickness than a thickness of the sealing plate 14 is formed on a bottom surface of the gas exhaust valve 17. The gas exhaust valve 17 is configured such that the thin portion is broken when a case internal pressure is the predetermined value or more. Thus, the gas in the battery case 10 is discharged to outside, so that the increased case internal pressure can be reduced.

In addition to the gas exhaust valve 17, the liquid injection hole 15 and two terminal insertion holes 18 and 19 are provided in the sealing plate 14. The liquid injection hole 15 is an opening that communicates with the internal space of the exterior body 12 and is provided for injecting an electrolytic solution in a manufacturing process of the battery 100. The liquid injection hole 15 is sealed by the sealing member 15a. As the sealing member 15a, for example, a blind rivet is preferably used. Thus, the sealing member 15a can be firmly fixed inside the battery case 10. Each of the terminal insertion holes 18 and 19 is formed in a corresponding one of both end potions of the sealing plate 14 in the long side direction Y. Each of the terminal insertion holes 18 and 19 passes through the sealing plate 14 in an up-down direction Z. As illustrated in FIG. 8, the positive electrode terminal 30 is inserted in the terminal insertion hole 18 at one side (a left side) in the long side direction Y. The negative electrode terminal 40 is inserted in the terminal insertion hole 19 at the other side (a right side) in the long side direction Y.

FIG. 11 is a perspective view schematically illustrating the wound electrode body mounted to the sealing plate 14. In this preferred embodiment, a plurality of (in this case, three) wound electrode bodies 20a, 20b, and 20c are accommodated in the battery case 10. Note that there is no particular limitation on a number of wound electrode bodies accommodated in one battery case 10, and the number of the wound electrode bodies may be one and may be two or more (plural). Note that, as illustrated in FIG. 8, the positive electrode current collector 50 is arranged on one side of each wound electrode body in the long side direction Y (a left side in FIG. 8) and the negative electrode current collector 60 is arranged on the other side thereof in the long side direction Y (a right side in FIG. 8). The wound electrode bodies 20a, 20b, and 20c are connected in parallel. However, the wound electrode bodies 20a, 20b, and 20c may be connected in series. The wound electrode bodies are herein accommodated in the exterior body 12 of the battery case 10 in a state of being covered by the electrode body holder 29 (see FIG. 9) formed of a resin sheet.

FIG. 12 is a perspective view schematically illustrating the wound electrode body 20a. FIG. 13 is a schematic view illustrating a configuration of the wound electrode body 20a. Herein, in FIG. 13, in order to make it easier to see, the adhesive layer 6 formed on the surface of the separator 26 is not illustrated. Note that, although the wound electrode body 20a will be described in detail below as an example, each of the wound electrode body 20b and the wound electrode body 20c can be formed in a similar configuration.

As illustrated in FIG. 13, the wound electrode body 20a includes the positive electrode 22, the negative electrode 24, and the separator 26. The wound electrode body 20a is herein a wound electrode body configured such that the strip-shaped positive electrode 22 and the strip-shaped negative electrode 24 are stacked with two strip-shaped separators 26 interposed therebetween and an obtained stacked body is wound around a winding axis WL as a center.

The wound electrode body 20a has a flat shape. The wound electrode body 20a is arranged in the exterior body 12 such that the winding axis WL extends approximately in parallel to the long side direction Y. Specifically, as illustrated in FIG. 9, the wound electrode body 20a includes the pair of curved portions (R portions) 20r opposed to the bottom wall 12a of the exterior body 12 and the sealing plate 14 and the flat portion 20f that connects the pair of curved portions 20r and is opposed to the first side walls 12b of the exterior body 12. The flat portion 20f extends along the first side walls 12b.

As illustrated in FIG. 13, the positive electrode 22 includes a positive electrode current collector 22c, and a positive electrode active material layer 22a and a positive electrode protective layer 22p that are fixed to at least one surface of the positive electrode current collector 22c. However, the positive electrode protective layer 22p is not essential and can be omitted in other preferred embodiments. The positive electrode current collector 22c has a strip shape. The positive electrode current collector 22c is formed of a conductive metal, such as, for example, aluminum, aluminum alloy, nickel, stainless steel, or the like. The positive electrode current collector 22c is a metal foil, specifically, an aluminum foil, herein.

The plurality of positive electrode tabs 22t are provided in one end portion of the positive electrode current collector 22c in the long side direction Y (a left end portion in FIG. 13). The plurality of positive electrode tabs 22t are provided at intervals (intermittently) in a longitudinal direction of the strip-shaped positive electrode 22. Each of the plurality of positive electrode tabs 22t protrudes outward from the separator 26 toward one side (a left side in FIG. 13) in an axis direction of the winding axis WL. Note that the positive electrode tabs 22t may be provided in the other side in the axis direction of the winding axis WL (a right side when indicated in FIG. 13), and may be provided at each of both sides in the axis direction of the winding axis WL. The positive electrode tab 22t is a portion of the positive electrode current collector 22c and is formed of a metal foil (an aluminum foil). However, the positive electrode tab 22t may be a separate member from the positive electrode current collector 22c. The positive electrode active material layer 22a and the positive electrode protective layer 22p are not formed in at least a portion of the positive electrode tab 22t, and a region where the positive electrode current collector 22c is exposed is formed in the portion.

As illustrated in FIG. 10, the plurality of positive electrode tabs 22t are stacked in the one end portion in the axis direction of the winding axis WL (a left end portion in FIG. 10) to form the positive electrode tab group 23. Each of the plurality of positive electrode tabs 22t is bent such that respective outer side ends thereof are aligned. Thus, an accommodation property into the battery case 10 can be increased, and a size of the battery 100 can be reduced. As illustrated in FIG. 8, the positive electrode tab group 23 is electrically connected to the positive electrode terminal 30 via the positive electrode current collector 50. Specifically, the positive electrode tab group 23 and the positive electrode second current collector 52 are connected at a connection portion J (see FIG. 10). The positive electrode second current collector 52 is electrically connected to the positive electrode terminal 30 via the positive electrode first current collector 51. Note that respective sizes of the plurality of positive electrode tabs 22t (a length in the long side direction Y and a width orthogonal to the long side direction Y, see FIG. 13) can be adjusted as appropriate, for example, in accordance with a forming position or the like, considering a state of being connected to the positive electrode current collector 50. Herein, the respective sizes of the plurality of positive electrode tabs 22t are different from each other such that the respective outer side ends thereof are aligned when being bent.

As illustrated in FIG. 13, the positive electrode active material layer 22a is provided in a strip shape to extend in a longitudinal direction of the strip-shaped positive electrode current collector 22c. The positive electrode active material layer 22a includes a positive electrode active material (for example, lithium-transition metal compound oxide, such as lithium nickel cobalt manganese composite oxide or the like) that can reversibly store and release a charge carrier. When it is assumed that an entire solid content of the positive electrode active material layer 22a is 100 mass%, the positive electrode active material may occupy generally 80 mass% or more, typically 90 mass% or more, and, for example, 95 mass% or more. The positive electrode active material layer 22a may include an optional component, such as, for example, a conductive material, a binder, various additive components, or the like, in addition to the positive electrode active material. As the conductive material, a carbon material, such as, for example, acetylene black (AB) or the like, can be used. As the binder, for example, polyvinylidene fluoride (PVdF) or the like can be used.

As illustrated in FIG. 13, the positive electrode protective layer 22p is provided in a boundary portion between the positive electrode current collector 22c and the positive electrode active material layer 22a in the long side direction Y. Herein, the positive electrode protective layer 22p is provided in one end portion of the positive electrode current collector 22c in the axis direction of the winding axis WL (the left end portion in FIG. 13). However, the positive electrode protective layer 22p may be provided in both end portions of the positive electrode current collector 22c in the axis direction. The positive electrode protective layer 22p is provided in a strip shape to extend along the positive electrode active material layer 22a. The positive electrode protective layer 22p includes an inorganic filler (for example, alumina). When it is assumed that an entire solid content of the positive electrode protective layer 22p is 100 mass%, the inorganic filler may occupy generally 50 mass% or more, typically 70 mass% or more, and, for example, 80 mass% or more. The positive electrode protective layer 22p may include an optional component, such as, for example, a conductive material, a binder, various additive components, or the like, in addition to the inorganic filler. The conductive material and the binder may be the same as those described above as examples that can be included in the positive electrode active material layer 22a.

As illustrated in FIG. 13, the negative electrode 24 includes a negative electrode current collector 24c and a negative electrode active material layer 24a fixed to at least one surface of the negative electrode current collector 24c. The negative electrode current collector 24c has a strip shape. The negative electrode current collector 24c is formed of a conductive metal, such as, for example, copper, copper alloy, nickel, stainless steel, or the like. The negative electrode current collector 24c is a metal foil, specifically, a copper foil herein.

The plurality of negative electrode tabs 24t are provided in one end portion of the negative electrode current collector 24c in the axis direction of the winding axis WL (a right end portion in FIG. 13). The plurality of negative electrode tabs 24t are provided at intervals (intermittently) in a longitudinal direction of the strip-shaped negative electrode 24. Each of the plurality of negative electrode tabs 24t protrudes outward from the separator 26 toward one side in the axis direction (the right side in FIG. 13). However, the negative electrode tabs 24t may be provided at the other end portion in the axis direction (the left end portion in FIG. 13), and may be provided at each of both sides in the axis direction. The negative electrode tab 24t is a portion of the negative electrode current collector 24c and is formed of a metal foil (a copper foil). However, the negative electrode tab 24t may be a separate member from the negative electrode current collector 24c. The negative electrode active material layer 24a is not formed at least in a portion of the negative electrode tab 24t, and a region where the negative electrode current collector 24c is exposed is provided in the portion.

As illustrated in FIG. 10, the plurality of negative electrode tabs 24t are stacked in the one end portion in the axis direction (a right end portion in FIG. 10) to form the negative electrode tab group 25. The negative electrode tab group 25 is preferably provided in a position symmetrical to the positive electrode tab group 23 in the axis direction. Each of the plurality of negative electrode tabs 24t is bent such that respective outer side ends thereof are aligned. Thus, the accommodation property into the battery case 10 can be increased, and the size of the battery 100 can be reduced. As illustrated in FIG. 8, the negative electrode tab group 25 is electrically connected to the negative electrode terminal 40 via the negative electrode current collector 60. Specifically, the negative electrode tab group 25 and the negative electrode second current collector 62 are connected at a connection portion J (see FIG. 10). The negative electrode second current collector 62 is electrically connected to the negative electrode terminal 40 via a negative electrode first current collector 61. Similar to the plurality of positive electrode tabs 22t, herein, respective sizes of the plurality of negative electrode tabs 24t are different from each other such that the respective outer side ends thereof are aligned when being bent.

As illustrated in FIG. 13, the negative electrode active material layer 24a is provided in a strip shape to extend in a longitudinal direction of the strip-shaped negative electrode current collector 24c. The negative electrode active material layer 24a includes a negative electrode active material (for example, a carbon material, such as graphite or the like) that can reversibly store and release a charge carrier. When it is assumed that an entire solid content of the negative electrode active material layer 24a is 100 mass%, the negative electrode active material may occupy generally 80 mass% or more, typically 90 mass% or more, and, for example, 95 mass% or more. The negative electrode active material layer 24a may include an optional component, such as, for example, a binder, a dispersant, various additive components, or the like, in addition to the negative electrode active material. As the binder, rubbers, such as, for example, styrene butadiene rubber (SBR) or the like, can be used. As the dispersant, celluloses, such as, for example, carboxymethyl cellulose (CMC) or the like, can be used.

The separator 26 is a strip-shaped member, as illustrated in FIG. 13 and FIG. 3. The separator 26 is an insulating sheet in which a plurality of micro through-holes through which the charge carrier can pass are formed. A width of the separator 26 is larger than a width of the negative electrode active material layer 24a. With the separator 26 provided between the positive electrode 22 and negative electrode 24, the positive electrode 22 and the negative electrode 24 can be prevented from contacting each other and the charge carrier (for example, lithium ions) can be moved between the positive electrode 22 and the negative electrode 24. Although not particularly limited, a thickness of the separator 26 (a length thereof in a stacking direction MD in FIG. 14, the same applies hereinafter) is preferably 3 µm or more, and is more preferably 5 µm or more. Moreover, the thickness of the separator 26 is preferably 25 µm or less, is more preferably 18 µm or less, and is further more preferably 14 µm or less.

Herein, two separators 26 are used for one wound electrode body 20a. It is preferable that, as in this preferred embodiment, one wound electrode body 20a includes two separators 26, that is, a first separator and a second separator. Herein, the two separators have the same configuration, but may have different configurations. In other preferred embodiments, one wound electrode body 20a may include only one separator. For example, when a stacked electrode body is manufactured as an electrode body, a strip-shaped separator folded in a zigzag shape may be used.

Herein, FIG. 14 is an enlarged view schematically illustrating an interface between the positive electrode 22, the negative electrode 24, and separator 26 according to this preferred embodiment. As illustrated in FIG. 14, the separator 26 according to this preferred embodiment includes a base material layer 27 and a heat resistance layer (HRL) 28 provided on one surface of the base material layer 27. The adhesion layer 6 is present on a surface of the heat resistance layer 28.

As the base material layer 27, a conventionally known microporous film used for a separator of a battery can be used without any particular limitation. The base material layer 27 is preferably a porous sheet-like member. The base material layer 27 may have a single-layer structure and may have a multilayer structure including two or more layers, for example, a three-layer structure. It is preferable that the base material layer 27 is formed of a polyolefin resin. It is more preferable that the entire base material layer 27 is formed of a polyolefin resin. The base material layer 27 may be, for example, a microporous film formed of polyolefin and may be a microporous film formed of polyethylene. Thus, flexibility of the separator 26 can be sufficiently ensured, and fabrication (wounding and press-forming) of the wound electrode body 20a can be easily performed. As the polyolefin resin, polyethylene (PE), polypropylene (PP), or a mixture thereof is preferable, and the base material layer 27 is more preferably formed of PE.

Although not particularly limited, a thickness of the base material layer 27 (a length thereof in the stacking direction MD, the same applies hereinafter) is preferably 3 µm or more, and is more preferably 5 µm or more. Moreover, the thickness of the base material layer 27 is preferably 25 µm or less, is more preferably 18 µm or less, and is further more preferably 14 µm or less. A gas permeability of the base material layer 27 is preferably 30 sec/100 cc to 500 sec/100 cc, is more preferably 30 sec/100 cc to 300 sec/100 cc, and is further more preferably 50 sec/100 cc to 200 sec/100 cc.

The heat resistance layer 28 is provided on the base material layer 27. The heat resistance layer 28 is preferably formed on the base material layer 27. The heat resistance layer 28 may be provided directly on a surface of the base material layer 27, and may be provided on the base material layer 27 via some other layer. The heat resistance layer 28 is preferably formed on one surface or both surfaces of the base material layer 27. However, the heat resistance layer 28 is not essential, and can be omitted in other preferred embodiments. The heat resistance layer 28 is herein provided on an entire surface of the base material layer 27 opposed to the positive electrode 22. Thus, thermal contraction of the separator 26 can be more appropriately suppressed, and the above-described configuration can contribute to increase of safety of the battery 100. A basis weight of the heat resistance layer 28 is herein uniform in a longitudinal direction LD of the separator 26 and in the winding axis direction WD. Although not particularly limited, a thickness of the heat resistance layer 28 (a length thereof in the stacking direction MD, the same applies hereinafter) is preferably 0.3 µm or more, is more preferably 0.5 µm or more, and is further more preferably 1 µm or more. Moreover, the thickness of the heat resistance layer 28 is preferably 6 µm or less, and is more preferably 4 µm or less. The heat resistance layer 28 preferably includes an inorganic filler and a heat resistance layer binder.

As the inorganic filler, a conventionally known inorganic filler used for this type of application can be used without any particular limitation. The inorganic filler preferably includes insulative ceramic particles. Among such inorganic fillers, considering heat resistance, easy availability, or the like, inorganic oxide, such as alumina, zirconia, silica, titania, or the like, metal hydroxide, such as aluminum hydroxide or the like, or cray mineral, such as boehmite or the like, is preferably used, and alumina and boehmite are more preferably used. From a viewpoint of suppressing thermal contraction of the separator 26, a compound including aluminum is particularly preferable. A ratio of the inorganic filler to a total mass of the heat resistance layer 28 is preferably 85 mass% or more, is more preferably 90 mass% or more, and is further more preferably 95 mass% or more.

As the heat resistance layer binder, a conventionally known binder used for this type of application can be used without any particular limitation. Specific examples of the heat resistance layer binder include acrylic resin, fluororesin (for example, PVdF), epoxy resin, urethane resin, ethylene-vinyl acetate resin, or the like. Among the above-described materials, acrylic resin is preferable.

Herein, the adhesion layer 6 is provided on a surface opposed to the positive electrode 22 and contacts the positive electrode 22. As illustrated in FIG. 14, the adhesion layer 6 is preferably formed on at least a surface of the separator 26 at a side of the positive electrode 22. Herein, the adhesion layer 6 is provided on the heat resistance layer 28. The adhesion layer 6 is preferably formed on the heat resistance layer 28. The adhesion layer 6 may be provided directly on a surface of the heat resistance layer 28, and may be provided on the heat resistance layer 28 via some other layer. The adhesion layer 6 may be provided directly on a surface of the base material layer 27, and may be provided on the base material layer 27 via some other layer than the heat resistance layer 28. The adhesion layer 6 has a relatively high affinity with an electrolytic solution, for example, as compared to the heat resistance layer 28, and can absorb the electrolytic solution to swell. Although not particularly limited, a thickness of the adhesion layer 6 (a length thereof in the stacking direction MD in FIG. 14, corresponding to T in FIG. 14, which can be also referred to as a thickness of the adhesion layer 6 after the pressing step described above) in the wound electrode body 20a is preferably 0.1 µm or more, is more preferably 0.2 µm or more, and is further more preferably 0.5 µm or more. Moreover, the thickness of the adhesion layer 6 is preferably 10 µm or less, is more preferably 5 µm or less, and is further more preferably 3 µm or less. That is, the thickness of the adhesion layer 6 in the wound electrode body 20a is preferably, for example, in a range of 0.1 µm to 10 µm. With the adhesion layer 6 in the wound electrode body 20a formed to have a thickness in the above-described range, adhesiveness of the adhesion layer 6, uniformization of charging and discharging reaction of the battery 100, suppression of Li deposition, or the like can be preferably realized.

A diameter of the adhesion layer 6 in the wound electrode body 20a (corresponding to D in FIG. 14, which can be also referred to as a diameter of the adhesion layer 6 after the pressing step described above) is, for example, 10 µm or more, is preferably 50 µm or more, is more preferably 75 µm or more, and is further more preferably 100 µm or more. The thickness of the adhesion layer 6 is, for example, 600 µm or less, is preferably 500 µm or less, is more preferably 300 µm or less, and is further more preferably 200 µm or less. That is, the thickness of the adhesion layer 6 in the wound electrode body 20a is, for example, in a range of 50 µm to 500 µm. With the adhesion layer 6 in the wound electrode body 20a formed to have a thickness in the above-described range, adhesiveness of the adhesion layer 6, uniformization of charging and discharging reaction of the battery 100, suppression of Li deposition, or the like can be preferably realized.

As for a resin or the like forming the adhesion layer 6, see corresponding part in <Method for Manufacturing Battery>.

The electrolytic solution may be similar to an electrolytic solution conventionally used, and there is no particular limitation thereon. The electrolytic solution is, for example, a nonaqueous electrolytic solution including a nonaqueous solvent and a supporting salt. Examples of the nonaqueous solvent include carbonates, such as, for example, ethylene carbonate, dimethyl carbonate, ethyl methyl carbonate, or the like. The supporting salt is, for example, a fluorine-containing lithium salt, such as LiPF₆ or the like. However, the electrolytic solution may be in a solid form (a solid electrolyte) and may be integrated with the wound electrode body group 20.

As illustrated in FIG. 8, the positive electrode terminal 30 is inserted in the terminal insertion hole 18 formed in one end portion of the sealing plate 14 in the long side direction Y (a left end portion in FIG. 8). The positive electrode terminal 30 is preferably formed of a metal, and is more preferably formed of, for example, aluminum or aluminum alloy. On the other hand, the negative electrode terminal 40 is inserted in the terminal insertion hole 19 formed in the other end portion of the sealing plate 14 in the long side direction Y (a right end portion in FIG. 8). Note that the negative electrode terminal 40 is preferably formed of a metal, and is more preferably formed of, for example, copper or copper alloy. Herein, each of the electrode terminals (the positive electrode terminal 30 and the negative electrode terminal 40) protrudes from the same surface of the battery case 10 (specifically, the sealing plate 14). However, the positive electrode terminal 30 and the negative electrode terminal 40 may be formed to protrude from different surfaces of the battery case 10. The electrode terminals (the positive electrode terminal 30 and the negative electrode terminal 40) inserted into the terminal insertion hole 18 and the terminal insertion hole 19, respectively, are preferably fixed to the sealing plate 14 by a caulking work or the like.

As described above, the positive electrode terminal 30 is electrically connected to the positive electrode 22 of each of the wound electrode bodies 20a, 20b, and 20c (see FIG. 11) via the positive electrode current collector 50 (the positive electrode first current collector 51 and the positive electrode second current collector 52) in the exterior body 12, as illustrated in FIG. 8. The positive electrode terminal 30 is insulated from the sealing plate 14 by the positive electrode internal insulating member 70 and the gasket 90. Note that the positive electrode internal insulating member 70 includes a base portion 70a arranged between the positive electrode first current collector 51 and the sealing plate 14 and a protruding portion 70b protruding from the base portion 70a toward the wound electrode body 20a. The positive electrode terminal 30 exposed to outside of the battery case 10 through the terminal insertion hole 18 is connected to the positive electrode external conductive member 32 outside the sealing plate 14. On the other hand, as illustrated in FIG. 8, the negative electrode terminal 40 is electrically connected to the negative electrode 24 of each of the wound electrode bodies 20a, 20b, and 20c (see FIG. 11) via the negative electrode current collector 60 (the negative electrode first current collector 61 and the negative electrode second current collector 62) in the exterior body 12. The negative electrode terminal 40 is insulated from the sealing plate 14 by the negative electrode internal insulating member 80 and the gasket 90. Note that, similar to the positive electrode internal insulating member 70, the negative electrode internal insulating member 80 includes a base portion 80a arranged between the negative electrode first current collector 61 and the sealing plate 14 and a protruding portion 80b protruding from the base portion 80a toward the wound electrode body 20a. The negative electrode terminal 40 exposed to outside of the battery case 10 through the terminal insertion hole 19 is connected to the negative electrode external conductive member 42 outside the sealing plate 14. The external insulating member 92 is arranged between each of the external conductive members (the positive electrode external conductive member 32 and the negative electrode external conductive member 42) described above and an outer surface 14d of the sealing plate 14. The external conductive members 32 and 42 can be insulated from the sealing plate 14 by the external insulating member 92.

The protruding portions 70b and 80b of the internal insulating members (the positive electrode internal insulating member 70 and the negative electrode internal insulating member 80) described above are arranged between the sealing plate 14 and the wound electrode body 20a. With the protruding portions 70b and 80b of the internal insulating members, upward movement of the wound electrode body 20a is restricted, and the sealing plate 14 and the wound electrode body 20a can be prevented from contacting each other.

### <Application of Battery>

The battery 100 can be used for various applications, and can be preferably used as a power source (a drive power source) for a motor mounted on a vehicle, such as, for example, a passenger vehicle, a truck, or the like. There is no particular limitation on a vehicle type. Examples of the vehicle type include, for example, a plug-in hybrid electric vehicle (PHEV), a hybrid electric vehicle (HEV), a battery electric vehicle (BEV), or the like. In the battery 100, variations in battery reaction are reduced, and therefore, the battery 100 can be preferably used for constructing an assembled battery.

One preferred embodiment of the present disclosure has been described above, but the preferred embodiment is merely an example. The present disclosure can be implemented in various other embodiments. The present disclosure can be carried out based on contents disclosed in this specification and the common general technical knowledge in the field. The technology described in the scope of claims includes various modifications and changes of the preferred embodiment described as an example above. For example, a portion of the preferred embodiment described above can be replaced with some other modified aspect. Some other modified aspect can be added to the preferred embodiment described above. Additionally, a technical feature can be deleted as appropriate unless the technical feature is described as an essential element.

For example, in the preferred embodiment described above, the adhesion layer 6 is formed on a surface of the separator 26 at a side opposed to the positive electrode 22, but is not limited thereto. In other preferred embodiments, the adhesion layer 6 may be formed on a surface of the separator 26 at a side opposed to the negative electrode 24. Alternatively, the adhesion layer 6 may be formed on the surface of the separator 26 at the side opposed to the positive electrode 22 and the surface of the separator 26 at the side opposed to the negative electrode 24. When the electrode body includes two separators, the adhesion layer may be arranged on a surface of only one of the separators.

As described above, the following items are given as specific aspects of the technology disclosed herein.

First Item: A method for manufacturing a storage device, the storage device including an electrode body that includes a first electrode, a second electrode, and a separator arranged between the first electrode and the second electrode, that includes an arranging step of arranging an adhesion layer slurry including an adhesive and at least one of a solvent that can dissolve the adhesive and a dispersion medium that can disperse the adhesive at least on one surface of the separator, a forming step of removing at least one of the solvent and the dispersion medium from the adhesion layer slurry on the separator to form an adhesion layer, and a stacking step of stacking the first electrode, the separator, and the second electrode in this order, and in which, in the stacking step, as the separator, a separator including an adhesion layer arranged in a shape of a plurality of dots on at least one surface of the separator is used, and each of the dots of the adhesion layer includes an adhesion layer non-formed region in a central portion thereof when viewed from top.

Second Item: The method for manufacturing a storage device according to the first item, in which, when it is assumed that an area of a first surface of the separator is S1 and a total area of a portion where the adhesion layer is arranged in the first surface is S2, S2/S1 ≤ 0.1.

Third Item: The method for manufacturing a storage device according to the first or second item, in which the stacking step includes a winding step of winding the strip-shaped first electrode and the strip-shaped second electrode with the strip-shaped separator interposed therebetween to fabricate a wound body.

Fourth Item: The method for manufacturing a storage device according to any one of the first to third items, in which the stacking step includes a pressing step of pressing the stacked first electrode, separator, and second electrode.

Fifth Item: The method for manufacturing a storage device according to any one of the first to fourth items, in which, in the stacking step, the adhesion layer is opposed to the first electrode, the first electrode includes lithium-transition metal compound oxide, the lithium-transition metal compound oxide includes Ni and a ratio of an Ni amount to a transition metal amount in terms of mole is 0.7 or more, and the adhesion layer slurry includes water.

Sixth Item: The method for manufacturing a storage device according to any one of the first to fifth items, in which, when viewed from top, a ratio of an area of the adhesion layer non-formed region to an area of the adhesion layer in a shape of dots is 1% or more and 90% or less.

Seventh Item: The method for manufacturing a storage device according to the first to sixth items, in which a diameter of each of the dots of the adhesion layer is 50 µm or more and 500 µm or less.

### DESCRIPTION OF REFERENCE CHARACTERS

- 1: Electrode body manufacturing device
- 2: Roller
- 3: Winding core
- 4: Adhesive application section
- 5: Drying section
- 6: Adhesion layer
- 10: Battery case
- 12: Exterior body
- 14: Sealing plate
- 15: Liquid injection hole
- 15a: Sealing member
- 17: Gas exhaust valve
- 18, 19: Terminal insertion hole
- 20: Electrode body group
- 20a to 20c: Electrode body
- 22: Positive electrode
- 23: Positive electrode tab group
- 24: Negative electrode
- 25: Negative electrode tab group
- 26: Separator
- 27: Base material layer
- 28: Heat resistance layer
- 30: Positive electrode terminal
- 32: Positive electrode external conductive member
- 40: Negative electrode terminal
- 42: Negative electrode external conductive member
- 50: Positive electrode current collector
- 60: Negative electrode current collector
- 70: Positive electrode internal insulating member
- 80: Negative electrode internal insulating member
- 90: Gasket
- 92: External insulating member
- 100: Battery (storage device)
- 200: Press machine
- E: Adhesion layer non-formed region

## Claims

1. A method for manufacturing a storage device (100), the storage device (100) including an electrode body (20a) that includes a first electrode (22), a second electrode (24), and a separator (26) arranged between the first electrode (22) and the second electrode (24), the method comprising:
an arranging step (S1) of arranging an adhesion layer slurry including an adhesive and at least one of a solvent that can dissolve the adhesive and a dispersion medium that can disperse the adhesive at least on one surface of the separator (26);
a forming step (S2) of removing at least one of the solvent and the dispersion medium from the adhesion layer slurry on the separator (26) to form an adhesion layer; and
a stacking step (S3) of stacking the first electrode (22), the separator (26), and the second electrode (24) in this order, wherein
in the stacking step (S3), as the separator (26), a separator (26) including an adhesion layer (6) arranged in a shape of a plurality of dots on at least one surface of the separator (26) is used, and
each of the dots of the adhesion layer (6) includes an adhesion layer non-formed region (E) in a central portion thereof when viewed from top.

2. The method for manufacturing a storage device (100) according to claim 1, wherein
when it is assumed that an area of a first surface of the separator (26) is S1 and a total area of a portion where the adhesion layer (6) is arranged in the first surface is S2, S2/S1 ≤ 0.1.

3. The method for manufacturing a storage device (100) according to claim 1 or 2, wherein
the stacking step (S3) includes a winding step of winding the strip-shaped first electrode (22) and the strip-shaped second electrode (24) with the strip-shaped separator (26) interposed therebetween to fabricate a wound body (20A).

4. The method for manufacturing a storage device (100) according to any one of claims 1 to 3, wherein
the stacking step (S3) includes a pressing step of pressing the stacked first electrode (22), separator (26), and second electrode (24).

5. The method for manufacturing a storage device (100) according to any one of claims 1 to 4, wherein
in the stacking step (S3), the adhesion layer (6) is opposed to the first electrode (22),
the first electrode (22) includes lithium-transition metal compound oxide,
the lithium-transition metal compound oxide includes Ni and a ratio of an Ni amount to a transition metal amount in terms of mole is 0.7 or more, and
the adhesion layer slurry includes water.

6. The method for manufacturing a storage device (100) according to any one of claims 1 to 5, wherein
when viewed from top,
a ratio of an area of the adhesion layer non-formed region (E) to an area of the adhesion layer (6) in a shape of dots is 1% or more and 90% or less.

7. The method for manufacturing a storage device (100) according to any one of claims 1 to 6, wherein
a diameter (d) of each of the dots of the adhesion layer (6) is 50 µm or more and 500 µm or less.
